# EUROPEAN PATENT APPLICATION

(11) **EP 4 421 113 A1**
(43) Date of publication of application: **28.08.2024**
(21) Application number: 23157793.3
(22) Date of filing: 21.02.2023
(51) Int. Cl.: C08J 5/18, B32B 27/18, A01N 37/36, C08K 5/09

(54) **ANTIMICROBIAL POLYMER SHEET AND ITS USE**

(71) Applicant: Purac Biochem B.V., 4206 AC Gorinchem (NL)
(72) Inventor: JANSEN, Martinus Adrianus Gertrudus, 4206 AC GORINCHEM (NL); JOCHEMS, Evelien Johanna Marinus, 4206 AC GORINCHEM (NL); GIJSEN, Rupertus Mattias Rafael, 4206 AC GORINCHEM (NL)
(74) Representative: De Vries & Metman

(57) **Abstract**

The present invention pertains to antimicrobial plastics and their use in, in particular, food packaging. Specifically, the invention pertains to a polymer sheet comprising a vinyl polymer surface layer, which comprises 0.1 to 10 wt.% of C8-C16 acyl lactylate or salt thereof, wherein the vinyl polymer surface layer comprises a polymer part that comprises at least 70 wt.% of vinyl polymer derived from homo- or copolymers derived from alkylene monomers that are free of heteroatoms and/or from copolymers derived from alkylene monomers that are free of heteroatoms and alkylene monomers substituted with carboxy, hydroxy or carboxy alkyl ester. The invention also pertains to a packaged food product, wherein a food product is packaged in packaging comprising a polymer sheet according to the invention, with at least part of the surface of the food product being in contact with the vinyl polymer surface layer. In addition, the invention pertains to a use of a polymer sheet according to the invention in the packaging of food products, with at least part of the surface of the food product being in contact with the vinyl polymer surface layer.

## Description

The present invention pertains to antimicrobial plastics and their use in, in particular, food packaging.

Food spoilage due to bacterial infection is not only a potential health hazard; it also leads to undesirable and unnecessary food waste. To prevent food spoilage, preservatives are often included in food products. However, not all food products are suitable for the inclusion of preservatives. This applies, e.g., to food products which are relatively unprocessed, such as pieces of meat. Further, there is a trend in the field of food products to lower the amount of or dispense with the use of preservatives, to meet the desire of consumers.

To address these issues, there is an increasing interest in antimicrobial packaging. An antimicrobial package can function as an additional or alternative measure to improve shelflife. Therefore, antimicrobial packaging, in particular disposable polymer-based antimicrobial packaging, would help to decrease food spoilage. Further, it would help to preserve those food products to which it is difficult to add preservatives.

It has been found, however, that the provision of disposable polymer-based antimicrobial packaging, in particular a polymer sheet is not an easy feat. The packaging should meet a substantial number of independent requirements, which may conflict with each other. In the first place, the polymer sheet should, obviously, increase the shelf life of the food product packaged therein. However, components showing anti-microbial activity *in vitro* are not always effective when incorporated in a polymer sheet. Further, it should be possible to manufacture and use the sheet in the manner conventional in the field of packaging food products, without detrimentally affecting the antimicrobial properties of the polymer sheet. However, the antimicrobial activity of a polymer sheet may be affected by the methods of incorporating or attaching the antimicrobial component into/onto a polymer sheet. Antimicrobial activity may, for example, be insufficient due to inadequate activation and/or dispersion throughout the polymer sheet, or through destruction (e.g. decomposition) of the antimicrobial component. In other cases, a polymer sheet having antimicrobial properties can only be arrived at through complex chemistry (e.g., surface treatment through plasma processes).

It has been found that compounds known for their biocidal efficacy are not necessarily suitable and effective when incorporated into a polymer sheet, in particular when incorporated into a polymer sheet *via* an extrusion process. Extrusion temperatures may, for example, deactivate antimicrobial materials. Alternatively, the extrusion process may render an antimicrobial material ineffective (for example, due to passivation of inorganic compounds, such as silver and zinc salts).

As an example, long chain fatty acids, and in particular lauric acid, are known for their antimicrobial activity. It has been found, however, that lauric acid shows no antibacterial activity when incorporated into a polymer sheet. The same goes for glycerolesters of long chain fatty acids, e.g., the monoglyceride of lauric acid. This compound is known to show antimicrobial effectivity in itself, but has been found to show no activity when incorporated into a polymer sheet.

There is need in the art for a polymer sheet which, when used in packaging of food products, shows antimicrobial activity and thus leads to an increased shelf life of food product packaged therein. The present invention provides such a polymer sheet.

The invention pertains to a polymer sheet comprising a vinyl polymer surface layer, in particular a vinyl polymer surface layer, which comprises 0.1 to 10 wt.% of C8-C16 acyl lactylate or salt thereof, wherein the vinyl polymer surface layer comprises a polymer part that comprises at least 70 wt.% of vinyl polymer derived from homo- or copolymers derived from alkylene monomers that are free of heteroatoms and/or from copolymers derived from alkylene monomers that are free of heteroatoms and alkylene monomers substituted with carboxy, hydroxy or carboxy alkyl ester. In some embodiments, the vinyl polymer surface layer comprises C8-C14 acyl lactylate or salt thereof, optionally C10-C14 acyl lactylate or salt thereof, most preferably C12-C14 acyl lactylate or salt thereof.

It has been found that the polymer sheet of the present invention shows antimicrobial activity and makes it possible to provide food packaging which is able to extend the shelf life of food packaged therein. Further advantages of the present invention and specific embodiments thereof will become apparent from the further specification.

The invention will be discussed in more detail below.

Acyl lactylates are esters of fatty acids and (poly)lactic acid or salts thereof. In the present invention, acyl lactylates of C8-C16 fatty acids are used. The lactylate esters can generally be represented by the formula R-COO[-CH(CH₃)-COO]ₙ-H or as a salt represented by the formula R-COO[-CH(CH₃)-COO]ₙ-M, in which the R-COO structure is derived from a fatty acid, wherein R is a C7-C15 alkyl or alkenyl chain which may be branched or unbranched, M is a metal cation (e.g. Na, K, Ca, Mg, Fe(II), Zn, or Cu(ll)) or NH₄, and n is an integer in the range of 1 to 6, preferably n is an integer in the range of 1 to 4. The value n indicates the number of lactic acid units present in the acyl lactylate used in the present invention. Where there is one lactic acid unit (n=1), the compound may be referred to as an acyl monolactylate. Where there are two lactic acid units (n=2), the compound may be referred to as an acyl dilactylate. For trilacylates, n equals three; for tetralactylates n equals four; for pentalactylates, n equals five; and for hexalactylates, n equals six. Where the term lactylate is used without prefix in the present specification, it is intended to refer to any mono- or polylactylate containing one to six lactylate units, unless the contrary is evident from the context. The acyl lactylate or salt thereof may, thus, contain one to six lactic acid units. Preferably, the acyl lactylate or salt thereof contain one to four lactic acid units.

Acyl lactylates in the form of a salt have an increased solubility in water. The lactylate is preferably a sodium acyl lactylate.

Suitable fatty acids include saturated fatty acids such as caprylic acid (CH₃(CH₂)₆COOH, C8:0), capric acid (CH₃(CH₂)₈COOH, C10:0), lauric acid (CH₃(CH₂)₁₀COOH, C12:0), myristic acid (CH₃(CH₂)₁₂COOH, C14:0), and palmitic acid (CH₃(CH₂)₁₄COOH, C16:0).

Suitable unsaturated fatty acids include myristoleic acid (CH₃(CH₂)₃CH=CH(CH₂)₇COOH, C14:1(n-5), cis), palmitoleic acid (CH₃(CH₂)₅CH=CH(CH₂)₇COOH, C16:1(n-7), cis), sapienic acid (CH₃(CH₂)₈CH=CH(CH₂)₄COOH, C16:1(n-10), cis).The alkyl or alkenyl chain of the saturated and unsaturated fatty acids may be branched or unbranched.

The final lactylate product may comprise further components, e.g., unreacted lactic acid or salt thereof and/or unreacted fatty acids or salt thereof. Oligomers of lactic acid (e.g. lactoyl lactic acid) or salt thereof, resulting from the manufacture of the lactylate product, may also be present.

In the present invention, acyl lactylates or salts thereof may be used individually or in mixtures. In some embodiments, the surface layer comprises C12 acyl lactylates and C14 acyl lactylates or salts thereof. The total amount of C12 and C14 acyl lactylates in the surface layer may be at least 50 wt.% of the total amount of acyl lactylates present in the surface layer, preferably at least 70 wt.%, more preferably at least 80 wt.%, most preferably at least 90 wt.%. Additionally or alternatively, the total amount of C12 and C14 acyl lactylates in the surface layer may be at most 80 wt.% of the total amount of acyl lactylates present in the surface layer, preferably at most 90 wt.%, more preferably at most 95 wt.%, most preferably at most 99 wt.%. The use of lauric acid (C12:0) lactylates, myristic acid (C14:0) lactylates or mixtures thereof is considered preferred. Use of lauric acid (C12:0) lactylates in a polymer sheet of the present invention shows activity against spoilage bacteria, whereas use of myristic acid (C14:0) lactylates is active against Gram-positive pathogens. In some embodiments, the use of lauric acid (C12:0) lactylates is preferred. In some embodiments, the use of myristic acid (C14:0) lactylates is preferred. In some embodiments, mixtures of lauric acid (C12:0) lactylates and myristic acid (C14:0) lactylates are preferred. The lauric acid (C12:0) lactylates and myristic acid (C14:0) lactylates may be present in a variety of ratios, based on the weight of the lauric acid and myristic acid used in the synthesis of the acyl lactylate (e.g. a ratio by weight of lauric acid over myristic acid from 0.1 to 9; preferably from 1 to 6; more preferably from 1.5 to 5; still more preferably from 1.5 to 4; even more preferably 1.5 to 3; and most preferably from 2 to 3).

The acyl lactylate or its salt is present in the surface layer in an amount of 0.1 to 10 wt.%, calculated on the total weight of the surface layer. If the acyl lactylate compound is present in an amount of less than 0.1 wt.%, the beneficial effect of the present invention will not be obtained. If the acyl lactylate compound is present in an amount of more than 10 wt.%, it may start to adversely affect the preparation and/or the properties of the surface layer. It is considered preferred for the lactylate compound to be present in an amount from 0.5 to 7 wt.%, calculated on the weight of the surface layer. Even more preferably, the lactylate compound is present in an amount from 1 to 5 wt.%, calculated on the weight of the surface layer. Still more preferably, the lactylate compound is present in an amount from 1 to less than 5 wt.% (e.g. 1 to 4 wt.%), calculated on the weight of the surface layer.

In addition to the acyl lactylate according to the invention, the surface layer may further comprise one or more fatty acids or salts thereof, lactic acid or a salt thereof, and/or one or more oligomers of lactic acid or salts thereof, e.g. as byproducts of the method of manufacturing the acyl lactylate. These additional compounds (i.e. byproducts) do not have or only have limited antimicrobial activity when included in polymer sheets.

The surface layer may further comprise one or more other antimicrobial components.

The surface layer of the polymer sheet is a vinyl polymer surface layer. In the present specification, the term "surface layer" refers to a polymer layer at the outside of the polymer sheet, that is, not covered by further polymer layers.

In the present specification the term "vinyl polymer" refers to homo- or copolymers derived from alkylene monomers (preferably C₂-C₈ alkylene monomers) that are free of heteroatoms and/or to copolymers derived from alkylene monomers (preferably C₂-C₈ alkylene monomers) that are free of heteroatoms and alkylene monomers (preferably C₂-C₈ alkylene monomers) substituted with carboxy, hydroxy or carboxy alkyl ester (e.g. a C₁-C₁₀ carboxy alkyl ester, preferably a C₁-C₄ carboxy alkyl ester). Examples of suitable alkylene monomers that are free of heteroatoms are ethylene, propylene, butylene isomers, hexene isomers, and octene isomers. Examples of suitable alkylene monomers substituted with carboxy, hydroxy or carboxy alkyl ester are vinylacetate, vinylalcohol, acrylic acid, methylacrylate, ethylacrylate, propylacrylate, and butylacrylate. Any alkylene monomers substituted with a carboxy group can at least partly be present in their salt form (proton exchanged by, e.g., Zn, Na, K). Blends of vinyl polymers as defined herein can also be used in polymer sheets.

In one embodiment, the polymer part of the vinyl polymer surface layer according to the invention comprises vinyl polymer derived from alkylene monomers that are free of heteroatoms. The vinyl polymer may comprise at least 70 wt.% ethylene and/or propylene units, preferably at least 80 wt.% ethylene and/or propylene units, more preferably at least 90 wt.% ethylene and/or propylene units, even more preferably at least 95 wt.% ethylene and/or propylene units. The vinyl polymer may additionally comprise at most 30 wt.% other alkylene monomers, preferably at most 20 wt.% other alkylene monomers, preferably at most 10 wt.% other alkylene monomers, more preferably at most 5 wt.% other alkylene monomers. These other alkylene monomers may, for example, be selected from butylene isomers (preferably but-1-ene, (2*Z*)-but-2-ene, (2*E*)-but-2-ene, and/or 2-methylprop-1-ene), hexene isomers (preferably 1-hexene, (*E*)-2-hexene, (*Z*)-2-hexene, (*E*)-3-hexene, and/or (*Z*)-3-hexene), and octene isomers (preferably 1-octene, (*E*)-2-octene, (*Z*)-2-octene, (*E*)-3-octene, (*Z*)-3-octene, (*E*)-4-octene, and/or (*Z*)-4-octene).

In another embodiment, the polymer part of the vinyl polymer surface layer according to the invention comprises a vinyl polymer derived from alkylene monomers that are free of heteroatoms and alkylene monomers substituted with carboxy, hydroxy or carboxy alkyl ester. The vinyl polymer may comprise at least 50 wt.% alkylene monomers that are free of heteroatoms (preferably at least 70 wt.%) and at most 50 wt.% alkylene monomers substituted with carboxy, hydroxy or carboxy alkyl ester (preferably at most 30 wt.%).

The vinyl polymer may be branched or cross-linkable (i.e. physically or chemically). The vinyl polymer may also comprise other commonly used additives such as antioxidants, nucleating agents, clarifying agents, lubricants, and/or antistatic agents.

The vinyl polymer may be a random copolymer. These random copolymers may comprise two or more alkylene monomers that are free of heteroatoms. Alternatively, the random copolymers may comprise at least one type of alkylene monomer that is free of heteroatoms and at least one type of alkylene monomer substituted with carboxy, hydroxy or carboxy alkyl ester. The vinyl polymer may also be a block copolymer. These block copolymers may comprise two or more alkylene monomers that are free of heteroatoms. Alternatively, the block copolymers may comprise at least one type of alkylene monomer that is free of heteroatoms and one type of alkylene monomer substituted with carboxy, hydroxy or carboxy alkyl ester. Polymers as described herein may, where applicable, be isotactic, atactic or syndiotactic polymers.

The polymer part of the vinyl polymer surface layer may be substantially free from, that is, be derived from less than 1 wt.%, in particular less than 0.5 wt.%, more in particular less than 0.1 wt.% of halogen-containing monomers such as vinylchloride, vinylidenechloride, tetrafluoroethylene, etc., calculated on the weight of the polymer present in the surface layer. The polymer part of the vinyl polymer surface layer preferably does not comprise acrylonitrile monomers, i.e. less than 1 wt.% acrylonitrile monomers, in particular less than 0.5 wt.%, more in particular less than 0.1 wt.% acrylonitrile monomers. The polymer part of the vinyl polymer surface layer preferably does not comprise styrene monomers, i.e. less than 1 wt.% styrene monomers, in particular less than 0.5 wt.%, more in particular less than 0.1 wt.% styrene monomers, calculated on the weight of the polymer present in the surface layer. The polymer part of the vinyl polymer surface layer preferably does not comprise monomers containing a phosphorus atom, i.e. less than 1 wt.%, in particular less than 0.5 wt.%, more in particular less than 0.1 wt.% monomers containing a phosphorus atom, calculated on the weight of the polymer present in the surface layer.

The polymer part of the vinyl polymer surface layer comprises at least 70 wt.% of vinyl polymer, in particular at least 80 wt.%, more in particular at least 90 wt.%, still more in particular at least 95 wt.%, even more in particular at least 98 wt.%, calculated on the weight of the polymer present in the surface layer. The polymer part of the vinyl polymer surface layer may consist (essentially) of vinyl polymer as defined herein.

Examples of suitable vinyl polymer surface layers are the following:
- A surface layer comprising polyethylene (PE), comprising at least 90 wt.%, in particular at least 95 wt.%, more in particular at least 98 wt.% of ethylene units, calculated on the weight of the polymer present in the surface layer.
- A surface layer comprising polypropylene (PP), comprising at least 90 wt.%, in particular at least 95 wt.%, more in particular at least 98 wt.% of propylene units, calculated on the weight of the polymer present in the surface layer.
- A surface layer comprising a polymer of ethylene and vinyl acetate, comprising 70 to 99 wt.% of ethylene units and 30 to 1 wt.% of vinyl acetate units, in particular 80 to 97 wt.% of ethylene units and 20 to 3 wt.% of vinyl acetate units, more in particular 85 to 95 wt.% of ethylene units and 15 to 5 wt.% of vinyl acetate units, calculated on the weight of the polymer present in the surface layer. This polymer is often indicated as EVA.
- A surface layer comprising a polymer of ethylene and methacrylate, comprising 70 to 99 wt.% of ethylene units and 30 to 1 wt.% of methyl acrylate units, in particular 75 to 95 wt.% of ethylene units and 25 to 5 wt.% of methyl acrylate units, more in particular 80 to 90 wt.% of ethylene units and 20 to 10 wt.% of methyl acrylate units, calculated on the weight of the polymer present in the surface layer. This polymer is often indicated as EMA.
- A surface layer comprising a polymer of ethylene and acrylic acid, comprising 80 to 99 wt.% of ethylene units and 20 to 1 wt.% of acrylic acid units, in particular 85 to 95 wt.% of ethylene units and 15 to 5 wt.% of acrylic acid units, more in particular 90 to 95 wt.% of ethylene units and 10 to 5 wt.% of acrylic acid units, calculated on the weight of the polymer present in the surface layer. This polymer is often indicated as EAA. The acrylic acid units can at least partly be present in their salt form.

The polymer sheet according to the invention generally has a thickness in the range of 10 to 500 micrometers, preferably in the range of 20 to 350 micrometers, more preferably in the range of 25 to 300 micrometers, even more preferably in the range of 30 to 250 micrometers, still more preferably in the range of 35 to 200 micrometers, most preferably in the range of 40 to 150 micrometers. If the thickness of the polymer sheet is below 10 micrometers the strength of the sheet may be insufficient to withstand the conditions during sheet manufacture, food packaging, and food transport, and storage. Thicknesses above 500 micrometers are generally not required to provide adequate properties. In some embodiments, the polymer sheet is an embossed polymer sheet.

The polymer sheet may be a single-layer polymer sheet, in which case it consists of the lactylate-containing vinyl polymer layer without further polymer layers being present. The polymer sheet may also be a layered polymer sheet, which comprises, in addition to a lactylate-containing surface layer one or more further functional polymers layers. If other functional polymer layers are present, the lactylate-containing surface layer is in contact with the food. The other functional polymer layer(s) may have a polymer composition which is the same as the polymer composition of the lactylate-containing surface layer. Alternatively, the other functional polymer layer(s) may have a polymer composition which is different from the polymer composition of the lactylate-containing surface layer.

Examples of functional polymer layers are so-called barrier layers and tie layers. Examples of gas barrier layers are layers comprising polyamide (PA), layers comprising ethylene vinyl alcohol (EVOH), layers comprising polyvinylidene dichloride (PVDC), layers comprising polyacrylonitrile (PAN), layers comprising polyethylene terephthalate (PET) and layers comprising polyethylene furanoate (PEF).

Tie layers or adhesive resins are usually part of a multilayer system to promote the interaction of the apolar vinyl polymer layer with non-similar polarity such as nylons, copolymers of ethylene-vinylacetate (EVOH), polyvinylidene dichloride (PVDC), or other materials such as metalized films and aluminum foil. Common tie layer materials are copolymers of ethylene-vinylacetate (EVA), ethylene-methyl acrylate (EMA), ethylene-acrylic acid (EAA), ethylene-methacrylic acid (EMAA) and anhydride modified ethylene (AMP). These compounds are known in the art and require no further elucidation here.

In principle, where the polymer sheet is a layered polymer sheet, a lactylate-containing surface layer may be present on both sides of the polymer sheet. However, generally it will suffice to have a lactylate-containing surface layer on one side of the sheet only, namely the side which, in use, is in contact with the food product.

The acyl lactylate compound or its salt can be incorporated into the surface layer in manners known in the art. A preferred method is compounding using a twin screw extruder. Another option is to dissolve the acyl lactylate compound or its salt in a solution of the vinyl polymer (e.g. solvent casting).

The acyl lactylate-containing polymer sheet can be manufactured through methods known in the art, optionally together with any other layers of the polymer sheet. Suitable methods include cast film extrusion and blown film extrusion for polymer melts, and solvent casting when the polymer is dissolved in a suitable solvent.

The polymer sheet according to the invention can be used in the packaging of food products, wherein the packaging is carried out in such a manner that at least part of the surface of the food product is in contact with the surface layer containing the acyl lactylate or its salt. Accordingly, at least part of the polymer sheet (i.e., at least part of the surface layer) is in contact with the food product. It is preferred for packaging to be carried out using vacuum packaging.

The polymer sheets of the invention have antimicrobial properties. The polymer sheets of the invention are, for example, effective against bacteria (e.g. on food), such as Gram-positive and/or Gram-negative bacteria. It is preferred the polymer sheet of the invention is effective against Gram-positive bacteria (e.g. on food), for example *Staphylococcus aureus, Listeria monocytogenes, Listeria innocua, Clostridia (e.g. Clostridium perfringens), Lactobacillus acidophilus, Lactobacillus sakei, Leuconostoc carnosum,* and *Enterococcus.* The polymer sheet may also be effective against Gram-negative bacteria, such as *Escherichia coli, Enterobacter cloacae,* and *Salmonella.* The polymer sheets of the invention may have an antimicrobial activity against bacteria (preferably Gram-positive bacteria), as determined according to ISO 22196, of at least 1.0 CFU/cm², more preferably at least 2.0 CFU/cm², still more preferably of at least 2.5/cm², most preferably at least 3.0 CFU/cm², when contacted with food product (preferably a meat product). Therefore, food products for which packaging with the polymer sheet according to the invention is of use are food products which have a surface that can be brought into contact with the vinyl polymer surface layer of the polymer sheet and are susceptible to the growth of bacteria, in particular Gram-positive bacteria, such as one or more bacteria selected from *Staphylococcus aureus, Listeria monocytogenes, Listeria innocua, Clostridia (e.g. Clostridium perfringens), Lactobacillus acidophilus, Lactobacillus sakei, Leuconostoc carnosum,* and *Enterococcus,* or *Gram-negative bacteria,* such as one or more bacteria selected from *Escherichia coli, Enterobacter cloacae,* and *Salmonella.*

The food product may be a processed or non-processed food product. In a preferred embodiment, the food product is non-processed. The food product may be raw. In a further embodiment, the food product is selected from pieces of meat, wherein meat for the present application also encompasses poultry and fish. In another embodiment, the food product is selected from fruits and vegetables. In another embodiment, the food product is cheese. In a preferred embodiment, the food product, more in particular pieces of meat, is packaged such that it is in contact with the surface layer over at least 50% of their surface area, in particular at least 70%, more in particular at least 80%, still more in particular at least 90%. This can be achieved through, e.g. vacuum packaging. Shrink wrapping or stretch wrapping may also be applied.

In one embodiment, the food product is a meat product which has a water activity (aw) similar to that of fresh meat, typically of above 0.90. In one preferred embodiment of the invention, the meat product has a water activity above 0.92, above 0.94, above 0.95, above 0.96 or above 0.97. Water activity may be measured using the method described in NEN-ISO 18787:2017, for example, using a Novasina LabMaster-aw. Furthermore, in one embodiment a meat product is used which has a moisture content of at least 30 wt. %, preferably at least 50 wt. %, more preferably at least 65 wt. %, most preferably at least 80 wt. %. Furthermore, in one embodiment a meat product is used with a moisture to protein (M:P) ratio of at least 3, more preferably at least 3.25, more preferably at least 3.5, most preferably at least 3.75.

The invention also pertains to a packaged food product, wherein a food product is packaged in packaging comprising a polymer sheet according to the invention, with at least part of the surface of the food product being in contact with the vinyl polymer surface layer.

The invention further pertains to the use of the polymer sheet as described herein in the packaging of food products, in particular solid meat product or solid dairy product, with at least part of the surface of the food product being in contact with the vinyl polymer surface layer.

The invention also pertains to the use of a polymer sheet according to the invention in the packaging of food products, in particular solid meat products or solid dairy products, with at least part of the surface of the food product being in contact with the vinyl polymer surface layer.

The invention also pertains to a method of using a polymer sheet according to the invention in the packaging of food products, comprising the steps of: a) providing a food product (preferably a solid meat product) and a polymer sheet according to the invention; and b) bringing at least part of the polymer sheet according to the invention into contact with the food product (preferably through vacuum wrapping).

The invention will be elucidated by the following examples, without being limited thereto or thereby.

To investigate the effect of various biocidal components when incorporated into a polymer sheet, the following examples were carried out.

### Example 1 (provided for reference)

Samples were prepared by mixing an active compound with LLDPE grade (type Dowlex^{™} 2035G) in an amount of 5 wt.% to form a blend. The blends were pressed into plates with a thickness of approximately 500 micrometers at 180 °C. The plates were tested according to ISO 22196 against S. *aureus,* with the following modification: the plates were incubated at 4°C for 0 hours and 120 hours (rather than at 37°C for 0 hours and 24 hours), to represent refrigeration conditions. The results are presented in Table 1 below. The antimicrobial activity R (in CFU/cm²) is defined by the formula R = Ct - Aₜ, wherein Aₜ is the average of the common logarithm of the number of viable cells (in CFU/cm²) recovered from the treated test specimens after 120 h, and wherein Ct is the average of the common logarithm of the number of viable cells (in CFU/cm²) recovered from the control culture after 120 h.

**Table 1. Determination of antibacterial activity (based on ISO 22196) for LLDPE plates containing 5 wt.% additive.**

| Incubation temperature: 4 °C Incubation periods 0h and 120h | Additive | Antimicrobial activity against *S*. *aureus* |
|---|---|---|
| LLDPE film (blank) | - | - |
| Sample 1 comparative | 5 wt.% lauric acid | - 0.31 |
| Sample 2 comparative | 5 wt.% monoglyceride of lauric acid | - 0.27 |

From Table 1 it can be seen the comparative samples 1 and 2, which contain, respectively lauric acid and the monoglyceride of lauric acid, do not show activity as compared to LLDPE film without additives. It should be noted that both lauric acid and the monoglyceride of lauric acid (also known as monolaurin or glycerol monolaurate) are known for their biocidal activity.

### Example 2

Samples were prepared by mixing an active compound with LLDPE in an amount of 2.75-3.25 wt.% (as specified in Table 2) to form a blend. The blends were pressed into plates with a thickness of approximately 500 micrometers. The plates were tested according to ISO 22196 against *S. aureus,* with the following modification: the plates were incubated at 4°C for 0 hours and 120 hours (rather than at 37°C for 0 hours and 24 hours), to represent refrigeration conditions. The results are presented in Table 2 below. The antimicrobial activity is expressed as log reduction obtained as compared to the LLDPE film without lactylate.

**Table 2. Determination of antibacterial activity (based on ISO 22196) for LLDPE plates containing 5 wt.% acyl lactylate.**

| | Additive | Antimicrobial activity against *S*. *aureus* |
|---|---|---|
| LLDPE film (blank) | - | - |
| Sample A according to the invention | 2.75 wt.% of a mixture of C12 and C14 lactylates | > 3.07 |
| Sample B according to the invention | 3.25 wt.% C12 lactylates | 3.05 |

From Table 2 it can be seen that samples A and B, which contain acyl lactylates according to the invention show antimicrobial effect against *S. aureus.* It should be noted that samples A and B, and sample A in particular, contain a lower amount of active component than the comparative samples.

It follows from the examples above that incorporation of compounds with known antimicrobial activity in polymer sheets does not necessarily result in polymer sheets with antimicrobial activity. Specifically, a polymer sheet comprising 5 wt.% of (the monoglyceride of) lauric acid, which is a known antimicrobial agent, did not show antimicrobial activity against *S. aureus.* In contrast, incorporation of acyl lactylates did result in polymer sheets with antimicrobial activity against *S. aureus.* It is particularly noteworthy that the polymer sheets comprising lactylates already demonstrated antimicrobial activity at relatively low loading levels (e.g. below 5 wt.%).

## Claims

1. Polymer sheet comprising a vinyl polymer surface layer, which comprises 0.1 to 10 wt.% of C8-C16 acyl lactylate or salt thereof, wherein the vinyl polymer surface layer comprises a polymer part that comprises at least 70 wt.% of vinyl polymer derived from homo- or copolymers derived from alkylene monomers that are free of heteroatoms and/or from copolymers derived from alkylene monomers that are free of heteroatoms and alkylene monomers substituted with carboxy, hydroxy or carboxy alkyl ester.

2. Polymer sheet according to claim 1, wherein the vinyl polymer surface layer comprises 0.5 to 7 wt.% of C8-C16 acyl lactylate or salt thereof, preferably 1 to 5 wt.% of C8-C16 lactylate or salt thereof, more preferably 1 to 4 wt.% of C8-C16 lactylate or salt thereof.

3. Polymer sheet according to claim 1 or 2, wherein the acyl lactylate or salt thereof contain one to six lactic acid units, preferably wherein the acyl lactylate or salt thereof contain one to four lactic acid units.

4. Polymer sheet according to any one of the preceding claims, wherein the vinyl polymer surface layer comprises C12 acyl lactylate and C14 acyl lactylate or salt thereof, optionally wherein the total amount of C12 and C14 acyl lactylates in the surface layer is at least 50 wt.%, optionally at least 70 wt.%, of the total amount of acyl lactylate present in the surface layer.

5. Polymer sheet according to any one of the preceding claims, wherein the vinyl polymer is derived from alkylene monomers that are free of heteroatoms,
optionally from at least 70 wt.% ethylene and/or propylene units, preferably from at least 80 wt.% ethylene and/or propylene unit, more preferably from at least 90 wt.% ethylene and/or propylene units, even more preferably from at least 95 wt.% ethylene and/or propylene units,
optionally wherein the vinyl polymer further comprises at most 30 wt.% other alkylene monomers, preferably at most 20 wt.% other alkylene monomers, preferably at most 10 wt.% other alkylene monomers, more preferably at most 5 wt.% other alkylene monomers,
optionally wherein the other alkylene monomers are selected from butylene isomers (preferably but-1-ene, (2*Z*)-but-2-ene, (2*E*)-but-2-ene, and/or 2-methylprop-1-ene), hexene isomers (preferably 1-hexene, (*E*)-2-hexene, (*Z*)-2-hexene, (*E*)-3-hexene, and/or (*Z*)-3-hexene), and octane isomers (preferably 1-octene, (*E*)-2-octene, (*Z*)-2-octene, (*E*)-3-octene, (*Z*)-3-octene, (*E*)-4-octene, and/or (*Z*)-4-octene),
optionally wherein the vinyl polymer is a vinyl homopolymer,
optionally wherein the vinyl polymer is a vinyl copolymer.

6. Polymer sheet according to any one of claims 1 to 4, wherein the vinyl polymer is derived from alkylene monomers that are free of heteroatoms and alkylene monomers substituted with carboxy, hydroxy or carboxy alkyl ester,
preferably wherein the vinyl polymer is derived from:
- at least 50 wt.% alkylene monomers that are free of heteroatoms, preferably at least 70 wt.%, optionally wherein the alkylene monomers that are free of heteroatoms are selected from one or more of ethylene, propylene, butylene isomers, hexene isomers, and octene isomers; and
- at most 50 wt.% alkylene monomers substituted with carboxy, hydroxy or carboxy alkyl ester, preferably at most 30 wt.%, optionally wherein the alkylene monomers substituted with carboxy, hydroxy or carboxy alkyl ester are selected from one or more of vinyl acetate, vinylalcohol, (meth)acrylic acid or salts thereof, methyl(meth)acrylate, ethyl(meth)acrylate, propyl(meth)acrylate, and butyl(meth)acrylate.

7. Polymer sheet according to any one of claims 1 to 6, wherein the vinyl polymer is derived from a (co)polymer selected from one or more of the group consisting of polyethylene (PE), polypropylene (PP), a copolymer of ethylene and vinyl acetate (EVA), a copolymer of ethylene and methacrylate (EMA), a copolymer of ethylene and acrylic acid (EAA) and ethylene and methacrylic acid (EMAA) in which the (meth)acrylic acid may be in its salt form.

8. Polymer sheet according to any one of the preceding claims, wherein the polymer sheet has a thickness in the range of 10 to 500 micrometers, preferably in the range of 20 to 350 micrometers, more preferably in the range of 25 to 300 micrometers, even more preferably in the range of 30 to 250 micrometers, still more preferably in the range of 35 to 200 micrometers, most preferably in the range of 40 to 150 micrometers.

9. Polymer sheet according to any one of the preceding claims, wherein the polymer sheet is configured to have antimicrobial activity, preferably against bacteria, more preferably against Gram-positive bacteria, when contacted with a food product.

10. Packaged food product, wherein a food product is packaged in packaging comprising a polymer sheet according to any one of the preceding claims, with at least part of the surface of the food product being in contact with the vinyl polymer surface layer.

11. Packaged food product according to claim 10, wherein at least 50% of the surface of the food product is in contact with the vinyl polymer surface layer, preferably wherein at least 70% of the surface of the food product is in contact with the vinyl polymer surface layer, more preferably wherein at least 80% of the surface of the food product is in contact with the surface layer, most preferably wherein at least 90% of the surface of the food product is in contact with the surface layer.

12. Packaged food product according to claim 10 or 11, wherein the food product is non-processed.

13. Packaged food product according to any one of claims 10 to 12, wherein the food product is a solid meat product, a solid dairy product, or a solid fruit or vegetable product, preferably wherein the food product is a solid meat product, preferably wherein the solid meat product has a water activity (aw) above 0.90, preferably above 0.95, more preferably above 0.97.

14. Packaged food product according to claim 13, wherein the solid meat product has a moisture content of at least 30 wt.%, preferably of at least 50 wt.%, more preferably of at least 65 wt.%, most preferably of at least 80 wt.%.

15. Use of a polymer sheet according to any one of claims 1 to 9 in the packaging of food products, in particular solid meat product or solid dairy product, with at least part of the surface of the food product being in contact with the vinyl polymer surface layer.
